# EUROPÄISCHE PATENTSCHRIFT

(11) **EP 0 576 819 B1**
(45) Veröffentlichungstag und Bekanntmachung des Hinweises auf die Patenterteilung: **31.01.1996**
(21) Anmeldenummer: 93107966.9
(22) Anmeldetag: 17.05.1993
(51) Int. Cl.: G05D 7/06, G01F 15/00

(54) **Verfahren und Vorrichtung zur Begrenzung eines Flusses durch eine Leitung**
Method and device for line flow limitation
Méthode et dispositif pour limiter l'écoulement dans un conduit

(30) Priorität: 30.06.1992 CH 2054/92
(43) Veröffentlichungstag der Anmeldung: 05.01.1994
(73) Patentinhaber: Landis & Gyr Business Support AG, CH-6301 Zug (CH)
(72) Erfinder: Schaer, Martin, Ing. HTL, CH-6312 Steinhausen (CH); Ries, Peter, Dr. sc. techn., CH-5734 Reinach (CH)
(74) Vertreter: EGLI-EUROPEAN PATENT ATTORNEYS

(56) Entgegenhaltungen:
- DE-A- 3 811 946
- GB-A- 2 033 618
- US-A- 5 086 806
- REVIEW OF SCIENTIFIC INSTRUMENTS Bd. 57, Nr. 12, Dezember 1986, NEW YORK US Seiten 3059 - 3062 SANDERS ET AL 'simple and reliable system for gas flow regulation and measurement'
- Section EI, Week 9148, 22. Januar 1992 Derwent Publications Ltd., London, GB; Class T06, Page A05, AN 352405 & SU-A-1 620989(VETETIN) 15.Januar 1991

## Beschreibung

Die Erfindung betrifft ein Verfahren zur Begrenzung eines Flusses durch eine Leitung gemäss dem Oberbegriff des Anspruchs 1 sowie eine Vorrichtung zur Durchführung des Verfahrens.

Bei der Verteilung eines fluiden Mediums in einem Leitungssystem, an welchem mehrere Verbraucher angeschlossen sind, insbesondere eines Heizmediums oder eines Heiz- und Kühlmediums in einer Heizungs- bzw. Klimaanlage kann es sehr leicht dazu kommen, dass ein Verbraucher, etwa aufgrund seiner Lage in der Nähe des Heiz- oder Klimatisierungsaggregats, derart überversorgt wird, dass die gleichzeitige ausreichende Versorgung anderer Verbraucher nicht mehr gewährleistet ist.

Dieses Problem hat man bisher zu lösen versucht, indem man bei der Inbetriebnahme der Anlage etwa in die Zuleitungen zu den einzelnen Verbrauchern eingebaute Drosseln manuell so einstellte, dass eine unter den meisten Bedingungen einigermassen adäquate Nennverteilung des Heiz- oder Kühlmediums gewährleistet war. Die Erfahrung zeigt jedoch, dass der Abgleich durch manuell einzustellende Drosseln oft nicht oder jedenfalls nicht mit der nötigen Sorgfalt ausgeführt wird, sodass eine von der Nennverteilung abweichende Verteilung des Mediums resultiert.

In DE-A1-38 11 946 ist ein Elektrischer Durchflußmesser beschrieben wobei der Durchfluß durch eine Überwachungseinrichtung auf eine besondere Überschreitung des festgehaltenen Mittelswertes kontrolliert wird.

Selbst ein sorgfältiger Abgleich kann wegen der hydraulischen Kopplung zwischen den Verbrauchern nur durchschnittliche Betriebsbedingungen berücksichtigen. Weicht der Betriebszustand der Anlage vom Nennbetriebszustand, auf den beim Abgleich abgestellt wurde, stark ab, so kann wiederum eine unangemessene Verteilung des Heiz- oder Kühlmediums resultieren.

Aufgabe der Erfindung ist es demnach, ein Verfahren zur Begrenzung eines Flusses durch eine Leitung anzugeben, durch welches insbesondere sichergestellt werden kann, dass keiner der angeschlossenen Verbraucher einer Heizungs- oder Klimaanlage einen übermässigen Anteil des Heiz- oder Kühlmediums beziehen kann, sodass Abweichungen der Verteilung desselben von der Nennverteilung in engen Grenzen gehalten werden. Ausserdem soll eine Vorrichtung zur Durchführung des Verfahrens angegeben werden.

Durch die Erfindung wird ein Abgleich zwischen den Verbrauchern ermöglicht, welcher automatisch den jedem Verbraucher zugemessenen Verbrauch derart begrenzt, dass ein bestimmter, durch das Verhalten des Verbrauchers und seine Lage in der Heiz- oder Klimaanlage sowie deren Betriebszustand nicht beeinflussbarer, aber frei wählbarer Sollwert nicht überschritten wird. Es wird dadurch verhindert, dass wenige Verbraucher einen unangemessen hohen Anteil der zur Verfügung stehenden Heiz- oder Kühlleistung an sich ziehen mit der Folge, dass für die übrigen keine ausreichende Leistung zur Verfügung steht und damit sichergestellt, dass jeder Verbraucher ausreichend versorgt wird. Die jeweiligen Sollwerte können von einer Leitstelle bestimmt und flexibel an sich ändernde Randbedingungen - Benützung oder Nichtbenützung von Räumen, wechselnde Aussentemperatur und Sonneneinstrahlung etc. - angepasst werden. Der Betrieb der Heiz- oder Klimaanlage gestaltet sich sowohl befriedigender als auch sparsamer.

Im folgenden wird die Erfindung anhand von Ausführungsbeispielen und ihre Funktion darstellenden Zeichnungen näher erläutert. Es zeigen
- Fig. 1: eine erste Vorrichtung zur Begrenzung des Flusses eines fluiden Mediums,
- Fig. 2: zeitliche Verläufe bestimmter Signale in der Vorrichtung nach Fig. 1,
- Fig. 3: eine zweite Vorrichtung zur Begrenzung des Flusses eines fluiden Mediums.

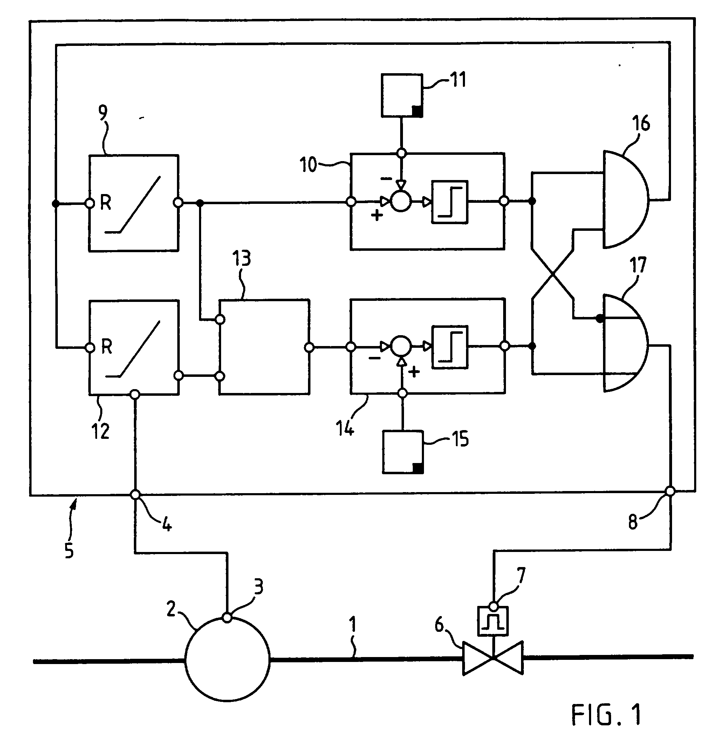

In Fig. 1 ist ein Leitungsabschnitt 1 dargestellt, welcher etwa in der Zuleitung zu einem Verbraucher in einer Heizungs- oder Klimaanlage oder auch in der Rückleitung von einem solchen Verbraucher liegen kann. Im Leitungsabschnitt 1 ist ein Durchflussmesser 2 zur Ueberwachung des Volumenstroms des Heizmediums durch den Leitungsabschnitt 1 eingebaut, dessen Ausgang 3 mit einem Eingang 4 eines Reglers 5 verbunden ist. Stromabwärts vom Durchflussmesser 2 ist der Leitungsabschnitt 1 mit einem Durchflussstellorgan 6 versehen, dessen Eingang 7 an einem Ausgang 8 des Reglers 5 hängt.

Der Regler 5 weist einen Zeitintegrator 9 mit einem Rücksetzeingang auf sowie ein demselben nachgeschalteten Zeitvergleichsglied 10 zum Vergleich des Ausgangssignals des Zeitintegrators 9 mit einer Sollzeit Tₛ, welche von einem Sollzeitspeicher 11 bestimmt wird. Mit dem Eingang 4 ist ein Flussintegrator 12, ebenfalls mit Rücksetzeingang, verbunden. Dem Flussintegrator 12 und dem Zeitintegrator 9 ist ein Dividierglied 13 nachgeschaltet, welches das Ausgangssignal des ersteren durch das des letzteren dividiert und dem ein Flussvergleichsglied 14 zum Vergleich seines Ausgangssignals mit einem Sollwert Fₛ des mittleren Flusses, der durch einen Sollflussspeicher 15 geliefert wird, nachgeschaltet ist. Die Sollzeit Tₛ und der Sollwert Fₛ des mittleren Flusses können fest programmiert oder variabel und durch eine Leitstelle bestimmbar sein.

Dem Zeitvergleichsglied 10 und dem Flussvergleichsglied 14 sind eine als UND-Gatter 16 ausgebildete, mit den Rücksetzeingängen des Zeitintegrators 9 und des Flussintegrators 12 verbundene Rücksetzschaltung und ein ODER-Gatter 17 mit einem invertierten Eingang als Auswerteschaltung nachgeschaltet, wobei der invertierte Eingang des ODER-Gatters 17 mit dem Ausgang des Zeitvergleichsglieds 10 verbunden ist, während sein Ausgang am Ausgang 8 des Reglers 5 liegt.

Die erwähnten Komponenten des Reglers 5 sind durchwegs analog aufgebaut. Der Regler könnte aber auch - mit Zwischenschaltung eines A/D- und eines D/A-Wandlers am Eingang 4 bzw. Ausgang 8 - als digitales Gerät ausgebildet sein.

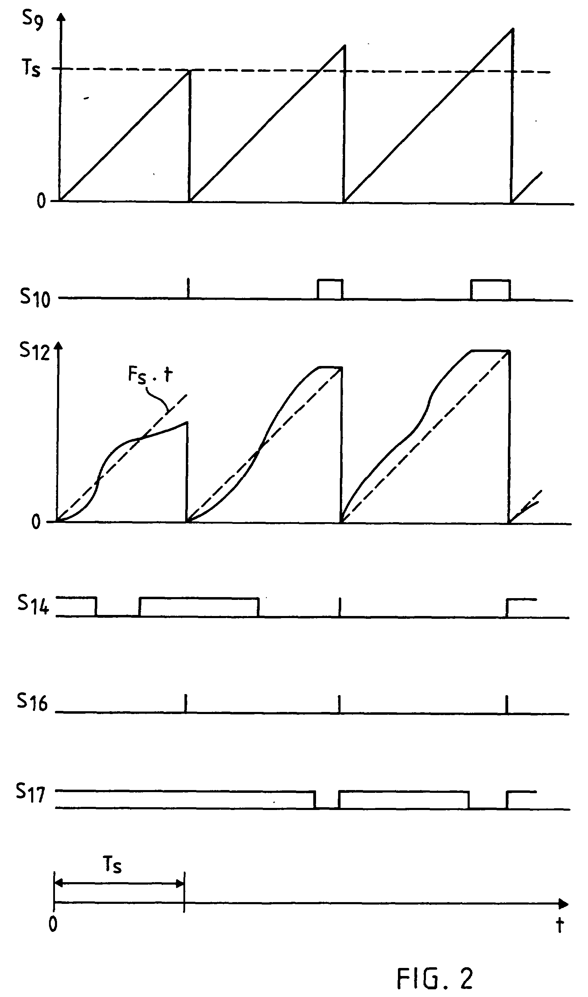

Im folgenden wird die Funktionsweise der Vorrichtung gemäss Fig. 1 unter Bezugnahme auf Fig. 2, welche die Verläufe mehrerer Signale als Funktionen der Zeit t zeigt, erläutert.

Wenn das vom UND-Gatter 16 gelieferte Rücksetzsignal an den Rücksetzeingängen des Zeitintegrators 9 und des Flussintegrators 12 auf 1 liegt, d. h. eine Spannung von z. B. +4V gegen Masse aufweist, bleiben die Ausgangssignale beider Integratoren auf 0, d. h. Masse. Fällt das Rücksetzsignal auf 0, so beginnt ein Ueberwachungsintervall. Der Zeitintegrator 9 beginnt zu laufen und sein Ausgangssignal S₉ steigt linear an. Das Ausgangssignal S₁₀ des Zeitvergleichsglieds 10 liegt auf 0, solange das Ausgangssignal S₉ des Zeitintegrators 9 kleiner ist als dasjenige des Sollzeitspeichers 11, d. h. solange die seit Beginn des Ueberwachungsintervalls verstrichene Zeit kleiner als Tₛ ist. Sobald die verstrichene Zeit Tₛ erreicht und damit das Ueberwachungsintervall abgelaufen ist, springt das Ausgangssignal S₁₀ des Zeitvergleichsglieds 10 auf 1. Tₛ kann z. B. einige Minuten betragen.

Mit dem Abfall des Rücksetzsignals auf 0 beginnt auch der Flussintegrator 12 zu laufen und ermittelt durch Integration des vom Durchflussmesser 2 erfassten momentanen Flusses den kumulierten Fluss seit Beginn des Ueberwachungsintervalls. Aus seinem Ausgangssignal S₁₂ und aus dem Ausgangssignal S₉ des Zeitintegrators 9 wird im Dividierglied 13 durch Division ein dem mittleren Fluss, d. h. dem zeitlichen Mittelwert des Flusses seit Beginn des Ueberwachungsintervalls entsprechendes Signal erzeugt. Es wird im Flussvergleichsglied 14 mit einem Signal verglichen, das dem Sollwert Fₛ des mittleren Flusses entspricht. Liegt der Ausgangswert des Dividierglieds 13 unter Fₛ, so liegt das Ausgangssignal S₁₄ des Flussvergleichsglieds 14 auf 1, sonst auf 0.

Im Graphen, der das Ausgangssignal S₁₂ des Flussintegrators 12 darstellt, sind gestrichelt Gerade eingezeichnet, welche einem linear ansteigenden kumulierten Fluss entsprechen, wie er sich ergibt, wenn der momentane Fluss konstant gleich Fₛ ist. Liegt der kumulierte Fluss, entsprechend dem Ausgangssignal S₁₂ des Flussintegrators 12, unterhalb der gestrichelten Linie, so liegt der mittlere Fluss seit Beginn des Ueberwachungsintervalls unter Fₛ, andernfalls darüber.

Ist am Ende des Ueberwachungsintervalls der mittlere Fluss kleiner als Fₛ und liegt damit das Ausgangssignal des Flussvergleichsglieds 14, S₁₄ auf 1, so springt S₁₆, das Ausgangssignal des UND-Gatters 16, auf 1 und bewirkt die Rücksetzung des Zeitintegrators 9 und des Flussintegrators 12. Das Ausgangssignal S₁₇ des ODER-Gatters 17 bleibt auf 1. Die Rücksetzung des Zeitintegrators 9 bewirkt, dass das Ausgangssignal S₁₀ des Zeitvergleichsglieds 10 auf 0 zurückfällt, wodurch auch das Rücksetzsignal S₁₆ wieder auf 0 gesetzt wird. Es beginnt ein neues Ueberwachungsintervall. Ueberschreitungen des Sollwerts des mittleren Flusses Fₛ innerhalb des Ueberwachungsintervalls haben keine Wirkung, wenn sie bis zum Ende desselben kompensiert sind. Sie werden zwar - was für die Funktion des Reglers 5 nicht nötig wäre - vom Flussvergleichsglied 14 registriert, ändern aber die Ausgangssignale S₁₆ und S₁₇ der beiden Gatter 16, 17 nicht, solange das Ausgangssignal S₁₀ des Zeitvergleichsglieds 10 auf 0 liegt.

Ist jedoch der mittlere Fluss am Ende des Ueberwachungsintervalls grösser als Fₛ und liegt somit das Ausgangssignal S₁₄ des Flussvergleichsglieds 14 auf 0, so wird das Ausgangssignal S₁₀ des Zeitvergleichsglieds 10, das am Ende des Ueberwachungsintervalls von 0 auf 1 springt, durch das UND-Gatter 16, an dessen zweitem Eingang das Signal S₁₄ liegt, nicht weitergeleitet, sodass die Rücksetzung des Zeitintegrators 9 und des Flussintegrators 12 unterbleibt. Zugleich fällt das Ausgangssignal S₁₇ des ODER-Gatters 17, an dessen invertiertem Eingang mit S₁₀ ein 1-Signal und an dessen nichtinvertiertem Eingang mit S₁₄ ein 0-Signal liegt, von 1 auf 0. Dies bewirkt, dass über den Ausgang 8 des Reglers 5 das Durchflussstellorgan 6 aktiviert wird und den Fluss durch den Leitungsabschnitt 1 sperrt.

Von diesem Augenblick an nimmt der kumulierte Fluss und damit das Ausgangssignal S₁₂ des Flussintegrators 14 nicht mehr zu, sodass der mittlere Fluss abnimmt, bis er Fₛ erreicht. Sobald dies der Fall ist, springt das Ausgangssignal S₁₄ des Flussvergleichsglieds 14 auf 1, was bewirkt, dass das Ausgangssignal S₁₇ des ODER-Gatters 17 von 0 auf 1 springt und das Durchflussstellorgan 6 den Leitungsabschnitt 1 wieder öffnet. Zugleich nimmt das Ausgangssignal S₁₆ des UND-Gatters 16 den Wert 1 an und bewirkt Rücksetzung des Zeitintegrators 9 und des Flussintegrators 12. Es beginnt sogleich ein neues Ueberwachungsintervall. Es wäre natürlich auch möglich, den mittleren Fluss durch Drosselung des Flusses auf einen positiven Wert, der unter dem Sollwert Fₛ des mittleren Flusses liegt, zu begrenzen, bis der gewünschte mittlere Fluss erreicht ist. Die beschriebene Lösung ist jedoch am einfachsten und zuverlässigsten und bei der relativ grossen Trägheit von Heizungsanlagen völlig ausreichend.

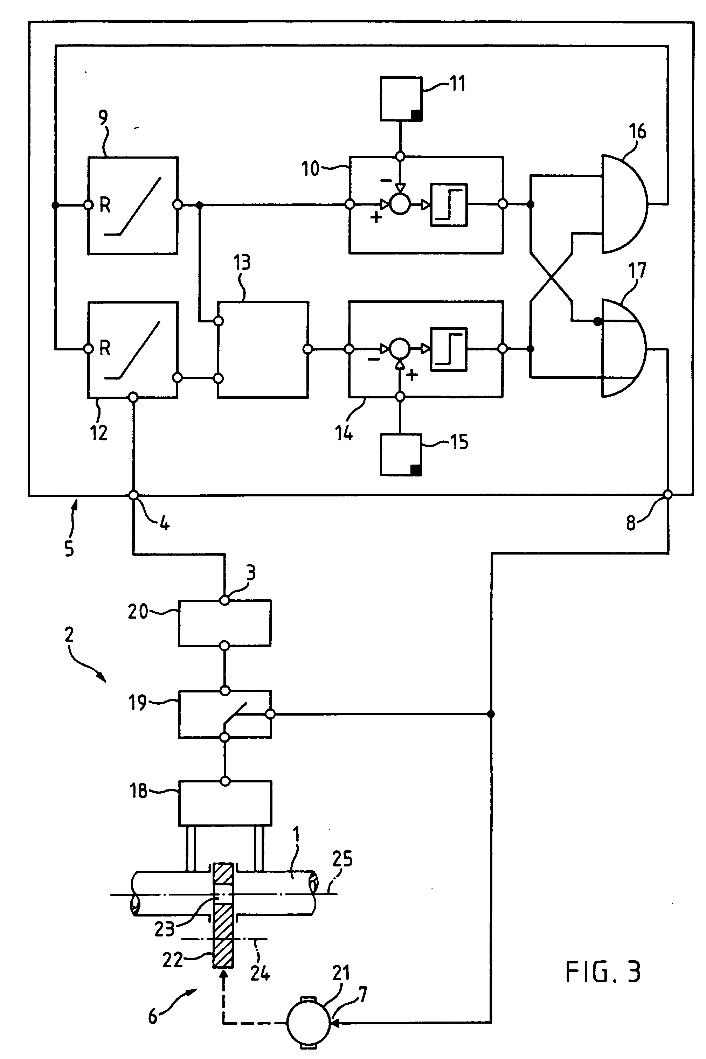

In Fig. 3 ist eine Vorrichtung dargestellt, welche prinzipiell der in Fig. 1 gezeigten entspricht, wobei jedoch der Durchflussmesser 2 und das Durchflussstellorgan 6 in einem Gehäuse integriert sind. Der Durchflussmesser 2 umfasst einen Differenzdrucksensor 18, dessen Ausgang über einen Schalter 19 mit einem Multiplizierglied 20 verbunden ist, das mit seinem Ausgang am Ausgang 3 des Durchflussmessers 2 liegt. Das Durchflussstellorgan 6 besteht aus einem Stellmotor 21, dessen Eingang am Eingang 7 des Durchflussstellorgans 6 liegt sowie einem von demselben angetriebenen Drosselorgan 22 mit zwei Abschnitten, von denen der eine eine Oeffnung 23 aufweist, der andere - durch eine Achse 24 angedeutet - hingegen nicht.

Fluchtet die Achse der Oeffnung 23 mit der Achse 25 des Leitungsabschnitts 1, so ist derselbe offen. Der Differenzdrucksensor 18 kann aus dem Druckunterschied zwischen zwei Punkten, von denen einer stromaufwärts und einer stromabwärts des Drosselorgans 22 liegt, nach dem bekannten Wirkdruckprinzip eine zum momentanen Fluss durch die Oeffnung 23 desselben proportionale Grösse ermitteln, welche über den Schalter 19 an das Multiplizierglied 20 gelangt und dort durch Multiplikation mit einem festen Faktor kalibriert wird, sodass das Resultat den Fluss durch die Oeffnung 23 wiedergibt. Das Drosselorgan 22, das einen ohnedies notwendigen Bestandteil des Durchflussstellorgans 6 darstellt, wird also zugleich für die Durchflussmessung benützt, was einen einfachen und platzsparenden Aufbau des integrierten Durchflussmessers und -stellorgans erlaubt.

Wird das Drosselorgan 22 durch den Stellmotor 21 in eine Position gebracht, in welcher seine Achse 24 mit der Achse 25 des Leitungsabschnitts 1 fluchtet, so wird derselbe gesperrt. Das Ausgangssignal des Reglers 5, das eine solche Sperrung des Leitungsabschnitts 1 bewirkt, öffnet zugleich den Schalter 19, damit nicht wegen eines allfälligen statischen Druckabfalls über das geschlossene Drosselorgan 22 vom Durchflussmesser 2 fälschlich ein Fluss im Leitungsabschnitt 1 angezeigt wird.

Auf die beschriebene Weise können die Volumenflüsse fluider Medien, insbesondere Flüssigkeiten wie Wasser oder Oel begrenzt werden und damit, wie im geschilderten Fall einer Heizungsanlage, auch Flüsse von Grössen, welche durch solche Medien transportiert werden wie eben Wärme -positive oder negative. Das System kann verfeinert werden, indem etwa noch die Temperaturdifferenz zwischen einer Zuleitung zu einem Verbraucher und der Ableitung von demselben berücksichtigt und z. B. mit dem Fluss und der Wärmekapazität des Mediums multipliziert und die resultierende Wärmeentnahme statt des reinen Volumenflusses begrenzt wird.

## Patentansprüche

1. Verfahren zur Begrenzung eines Flusses durch eine Leitung derart, dass der Fluss im zeitlichen Mittel einen Sollwert (Fₛ) nicht überschreitet, **dadurch gekennzeichnet, dass** mindestens am Ende eines Ueberwachungsintervalls, d. h. nach Ablauf einer Sollzeit (Tₛ) seit Beginn desselben, festgestellt wird, ob der durch Mittelung des Flusses über die Zeit seit Beginn des Ueberwachungsintervalls ermittelte mittlere Fluss den Sollwert (Fₛ) überschreitet, falls dies zutrifft, der Fluss mindestens solange auf einen unterhalb des Sollwerts liegenden Drosselwert begrenzt wird, bis der mittlere Fluss mindestens auf den Sollwert (Fₛ) gefallen ist und dann ein neues Ueberwachungsintervall begonnen und die Begrenzung des Flusses auf den Drosselwert aufgehoben wird.

2. Verfahren nach Anspruch 1, **dadurch gekennzeichnet, dass** der Fluss ständig gemessen und vom Beginn des Ueberwachungsintervalls an zum kumulierten Fluss integriert und mindestens vom Ende des Ueberwachungsintervalls an durch Division des kumulierten Flusses durch die seit Beginn des Ueberwachungsintervalls verflossene Zeit der mittlere Fluss ständig ermittelt und überwacht wird.

3. Verfahren nach Anspruch 1 oder 2, **dadurch gekennzeichnet, dass**, falls der mittlere Fluss am Ende des Ueberwachungsintervalls den Sollwert (Fₛ) nicht überschreitet oder andernfalls, sobald er auf denselben abgesunken ist, unmittelbar ein neues Ueberwachungsintervall begonnen wird.

4. Verfahren nach einem der Ansprüche 1 bis 3, **dadurch gekennzeichnet, dass** die Begrenzung des Flusses auf den Drosselwert gegebenenfalls unmittelbar zu Beginn des Ueberwachungsintervalls aufgehoben wird.

5. Verfahren nach einem der Ansprüche 1 bis 4, **dadurch gekennzeichnet, dass** der Drosselwert 0 beträgt.

6. Verfahren nach einem der Ansprüche 1 bis 5, **dadurch gekennzeichnet, dass** der Fluss aufgrund eines zwischen in Strömungsrichtung beabstandeten Punkten gemessenen Druckabfalls ermittelt wird.

7. Verfahren nach einem der Ansprüche 1 bis 6, **dadurch gekennzeichnet, dass** der Fluss ein Volumenfluss eines fluiden Mediums in einer Heizungs- oder Klimaanlage ist.

8. Vorrichtung zur Durchführung des Verfahrens nach einem der Ansprüche 1 bis 7, mit einem Regler (5) zur Verarbeitung des Ausgangssignals eines Durchflussmessers (2) und zur Steuerung eines Durchflussstellorgans (6), **dadurch gekennzeichnet, dass** der Regler (5) einen Zeitintegrator (9) mit Rücksetzeingang (R) und ein demselben nachgeschaltetes Zeitvergleichsglied (10) zum Vergleich seines Ausgangssignals (S₉) mit einer der Länge des Ueberwachungsintervalls entsprechenden Sollzeit (Tₛ) sowie einen Flussintegrator (12) mit Rücksetzeingang (R) zur Integration des vom Durchflussmesser (2) gemessenen Flusses, ein dem Flussintegrator (12) und dem Zeitintegrator (9) nachgeschaltetes Dividierglied (13) zur Ermittlung des mittleren Flusses und ein demselben nachgeschaltetes Flussvergleichsglied (14) zum Vergleich des Ausgangssignals des Dividierglieds (13) mit dem Sollwert (Fₛ) des mittleren Flusses umfasst sowie eine Auswerteschaltung zur Aktivierung des Drosselstellorgans (6) und eine Rücksetzschaltung zur Rückstellung des Zeitintegrators (9) und des Flussintegrators (12) aufgrund der Ausgangssignale (S₁₀, S₁₄) des Zeitvergleichsglieds (10) und des Flussvergleichsglieds (14).

9. Vorrichtung nach Anspruch 8, **dadurch gekennzeichnet, dass** die Auswerteschaltung genau dann ein das Drosselstellorgan (6) aktivierendes Signal erzeugt, wenn das Ausgangssignal (S₁₀) des Zeitvergleichsglieds (10) anzeigt, dass der Ausgangswert (S₉) des Zeitintegrators (9) die Sollzeit (Tₛ) überschreitet und das Ausgangssignal (S₁₄) des Flussvergleichsglieds (14) anzeigt, dass der Ausgangswert des Dividierglieds (13) den Sollwert (Fₛ) des mittleren Flusses überschreitet.

10. Vorrichtung nach Anspruch 8 oder 9, **dadurch gekennzeichnet, dass** die Rücksetzschaltung genau dann ein Rücksetzsignal zur Rücksetzung des Zeitintegrators (9) und des Flussintegrators (12) erzeugt, wenn das Ausgangssignal (S₁₀) des Zeitvergleichsglieds (10) anzeigt, dass der Ausgangswert (S₉) des Zeitintegrators (9) der Sollzeit (Tₛ) mindestens entspricht und der Ausgangswert (S₁₄) des Flussvergleichsglieds (14) anzeigt, dass der mittlere Fluss den Sollwert (Fₛ) nicht überschreitet.

11. Vorrichtung nach den Ansprüchen 9 und 10, **dadurch gekennzeichnet, dass** das Zeitvergleichsglied (10) genau dann ein 1-Signal erzeugt, wenn der Ausgangswert (S₉) des Zeitintegrators (9) der Sollzeit (Tₛ) mindestens entspricht, das Flussvergleichsglied (14) genau dann ein 1-Signal erzeugt, wenn der Ausgangswert des Dividierglieds (13) den Sollwert (Fₛ) des mittleren Flusses nicht überschreitet und die Auswerteschaltung als ODER-Gatter (17) ausgebildet ist mit einem invertierten Eingang, an welchem das Ausgangssignal (S₁₀) des Zeitvergleichsglieds (10) liegt, während die Rücksetzschaltung als UND-Gatter (16) ausgebildet ist.

12. Vorrichtung nach einem der Ansprüche 8 bis 11, **dadurch gekennzeichnet, dass** der Durchflussmesser (2) zwecks Ermittlung des Flusses aufgrund eines zwischen zwei in Strömungsrichtung beabstandeten Punkten gemessenen Druckabfalls einen Differenzdrucksensor (18) umfasst.

13. Vorrichtung nach Anspruch 12, **dadurch gekennzeichnet, dass** der vom Differenzdrucksensor (18) gemessene Druckabfall an einem in das Durchflussstellorgan (6) integrierten Drosselorgan (22) auftritt, welches von einem Stellmotor (21) gestellt wird.

14. Vorrichtung nach Anspruch 13, **dadurch gekennzeichnet, dass** das Drosselorgan (22) bei aktiviertem Stellmotor (21) den Fluss vollständig sperrt und dass dem Differenzdrucksensor (18) ein Schalter (19) nachgeschaltet ist, welcher vom den Stellmotor (21) aktivierenden Signal geöffnet wird.

## Claims

1. A method of limiting a flow through a conduit in such a way that on average in respect of time the flow does not exceed a reference value (Fₛ), characterised in that at least at the end of a monitoring interval, that is to say after expiry of a reference time (Tₛ) since the beginning thereof, it is established whether the average flow ascertained by averaging of the flow over the time since the beginning of the monitoring interval exceeds the reference value (Fₛ), if that is the case, the flow is limited to a throttle value below the reference value at least until the average flow has fallen at least to the reference value (Fₛ) and then a new monitoring interval is begun and the limitation of the flow to the throttle value is removed.

2. A method according to claim 1 characterised in that the flow is constantly measured and integrated from the beginning of the monitoring interval to give the cumulative flow and the average flow is constantly ascertained and monitored at least from the end of the monitoring interval by division of the cumulative flow by the time elapsed since the beginning of the monitoring interval.

3. A method according to claim 1 or claim 2 characterised in that, if the average flow at the end of the monitoring interval does not exceed the reference value (Fₛ) or otherwise, as soon as it has fallen to same, a new monitoring interval is immediately begun.

4. A method according to one of claims 1 to 3 characterised in that the limitation of the flow to the throttle value is possibly removed immediately at the beginning of the monitoring interval.

5. A method according to one of claims 1 to 4 characterised in that the throttle value is 0.

6. A method according to one of claims 1 to 5 characterised in that the flow is ascertained on the basis of a pressure drop measured between points which are spaced in the flow direction.

7. A method according to one of claims 1 to 6 characterised in that the flow is a volume flow of a fluid medium in a heating or air-conditioning installation.

8. Apparatus for carrying out the method according to one of claims 1 to 7 comprising a regulator (5) for processing the output signal of a flowmeter (2) and for controlling a flow setting member (6), characterised in that the regulator (5) includes a time integrator (9) with resetting input (R) and a time comparison member (10) connected on the output side thereof for comparison of its output signal (S₉) to a reference time (Tₛ) corresponding to the length of the monitoring interval as well as a flow integrator (12) with resetting input (R) for integration of the flow measured by the flowmeter (2), a dividing member (13) which is connected on the output side of the flow integrator (12) and the time integrator (9) for ascertaining the average flow and a flow comparison member (14) which is connected on the output side of the dividing member for comparison of the output signal of the dividing member (13) with the reference value (Fₛ) of the average flow, as well as an evaluation circuit for activation of the throttle setting member (6) and a resetting circuit for resetting the time integrator (9) and the flow integrator (12) on the basis of the output signals (S₁₀ , S₁₄) of the time comparison member (10) and the flow comparison member (14).

9. Apparatus according to claim 8 characterised in that the evaluation circuit produces a signal for activating the throttle setting member (6) precisely when the output signal (S₁₀) of the time comparison member (10) indicates that the output value (S₉) of the time integrator (9) exceeds the reference time (Tₛ ) and the output signal (S₁₄) of the flow comparison member (14) indicates that the output value of the dividing member (13) exceeds the reference value (Fₛ) of the average flow.

10. Apparatus according to claim 8 or claim 9 characterised in that the resetting circuit produces a resetting signal for resetting the time integrator (9) and the flow integrator (12) precisely when the output signal (S₁₀) of the time comparison member (10) indicates that the output value (S₉) of the time integrator (9) at least corresponds to the reference time (Tₛ) and the output value (S₁₄) of the flow comparison member (14) indicates that the average flow does not exceed the reference value (Fₛ).

11. Apparatus according to claims 9 and 10 characterised in that the time comparison member (10) produces a 1-signal precisely when the output value (S₉) of the time integrator (9) at least corresponds to the reference time (Tₛ), the flow comparison member (14) produces a 1-signal precisely when the output value of the dividing member (13) does not exceed the reference value (Fₛ) of the average flow and the evaluation circuit is in the form of an OR-gate (17) with an inverted input to which the output signal (S₁₀) of the time comparison member (10) is applied while the resetting circuit is in the form of an AND-gate (16).

12. Apparatus according to one of claims 8 to 11 characterised in that the flowmeter (2) includes a differential pressure sensor (18) for the purposes of ascertaining the flow on the basis of a pressure drop measured between two points which are spaced in the flow direction.

13. Apparatus according to claim 12 characterised in that the pressure drop measured by the differential pressure sensor (18) occurs at a throttle member (22) which is integrated into the flow setting member (6) and which is set by a setting motor (21).

14. Apparatus according to claim 13 characterised in that when the setting motor (21) is activated the throttle member (22) completely blocks the flow and that connected on the output side of the differential pressure sensor (18) is a switch (19) which is opened by the signal activating the setting motor (21).

## Revendications

1. Procédé pour limiter un écoulement dans une canalisation de telle sorte que l'écoulement ne dépasse, en moyenne dans le temps, une valeur de consigne (Fₛ), caractérisé en ce qu'au moins à la fin d'un intervalle de contrôle, c'est-à-dire après l'écoulement d'un intervalle de temps de consigne (Tₛ) à partir du début de ce dernier, on détermine si l'écoulement moyen, déterminé par formation de la moyenne de l'écoulement pendant l'intervalle de temps s'étendant depuis le début de l'intervalle de contrôle, dépasse la valeur de consigne (Fₛ), et dans le cas où ceci se produit, on limite l'écoulement jusqu'à une valeur d'étranglement inférieure à la valeur de consigne, au moins jusqu'à ce que l'écoulement moyen soit tombé au moins à la valeur de consigne (Fₛ), puis un nouvel intervalle de contrôle démarre et la limitation de l'écoulement à la valeur d'étranglement est supprimée.

2. Procédé selon la revendication 1, caractérisé en ce qu'on mesure en permanence l'écoulement et on l'intègre depuis le début de l'intervalle de contrôle, pour former l'écoulement cumulé et on détermine et on contrôle en permanence l'écoulement moyen au moins à partir de la fin de l'intervalle de contrôle, par division de l'écoulement cumulé par le temps qui s'est écoulé depuis le début de l'intervalle de contrôle.

3. Procédé selon la revendication 1 ou 2, caractérisé en ce que dans le cas où l'écoulement moyen ne dépasse pas la valeur de consigne (Fₛ) à la fin de l'intervalle de contrôle ou, sinon, dès qu'il est retombé à cette valeur de consigne, un nouvel intervalle de contrôle commence immédiatement.

4. Procédé selon l'une des revendications 1 à 3, caractérisé en ce que la limitation de l'écoulement à la valeur d'étranglement est supprimée éventuellement directement au début de l'intervalle de contrôle.

5. Procédé selon l'une des revendications 1 à 4, caractérisé en ce que la valeur d'étranglement est égale à 0.

6. Procédé selon l'une des revendications 1 à 5, caractérisé en ce que l'écoulement est déterminé sur la base d'une chute de pression mesurée entre des points qui sont distants dans la direction d'écoulement.

7. Procédé selon l'une des revendications 1 à 6, caractérisé en ce que l'écoulement est un écoulement volumique d'un milieu fluide dans une installation de chauffage ou de climatisation.

8. Dispositif pour la mise en oeuvre du procédé selon l'une des revendications 1 à 7, comportant un régulateur (5) servant à traiter le signal de sortie d'un débitmètre (2) et à commander un organe (6) de réglage du débit, caractérisé en ce que le régulateur (5) contient un intégrateur de temps (9) comportant une entrée de remise à zéro (A) et un circuit de comparaison de temps (10) branché en aval de cet intégrateur et servant à comparer son signal de sortie (S₉) à un intervalle de temps de consigne (Tₛ), qui correspond à la durée de l'intervalle de contrôle, ainsi qu'un intégrateur d'écoulement (12) comportant une entrée de remise à zéro (A) pour l'intégration de l'écoulement mesuré par le débitmètre (2), un circuit diviseur (13) branché en aval de l'intégrateur d'écoulement et de l'intégrateur de temps (9) pour déterminer un écoulement moyen et un circuit comparateur d'écoulement (14) branché en aval de ce circuit diviseur et servant à comparer le signal de sortie du circuit diviseur (13) à la valeur de consigne (Fₛ) de l'écoulement moyen, ainsi qu'un circuit d'évaluation pour activer l'organe de réglage d'étranglement (6) et un circuit de remise à zéro pour ramener à zéro l'intégrateur de temps (9) et l'intégrateur d'écoulement (12) sur la base des signaux de sortie (S₁₀, S₁₄) du circuit de comparaison de temps (10) et du circuit de comparaison d'écoulement (14).

9. Dispositif selon la revendication 8, caractérisé en ce que le circuit d'évaluation produit un signal activant l'organe de réglage d'étranglement (6), précisément lorsque le signal de sortie (S₁₀) du circuit de comparaison de temps (10) indique que la valeur de sortie (S₉) de l'intégrateur de temps (9) dépasse l'intervalle de temps de consigne (Tₛ), et le signal de sortie (S₁₄) du circuit de comparaison d'écoulement (14) ainsi que la valeur de sortie du circuit diviseur (13) dépasse la valeur de consigne (Fₛ) de l'écoulement moyen.

10. Dispositif selon la revendication 8 ou 9, caractérisé en ce que le circuit de remise à zéro produit un signal de remise à zéro pour ramener à zéro l'intégrateur de temps (9) et l'intégrateur d'écoulement (12) précisément lorsque le signal de sortie (S₁₀) du circuit de comparaison de temps (10) indique que la valeur de sortie (S₉) de l'intégrateur de temps (9) correspond au moins à l'intervalle de temps de consigne (Tₛ), et la valeur de sortie (S₁₄) du circuit de comparaison d'écoulement (14) indique que l'écoulement moyen ne dépasse pas la valeur de consigne (Fₛ).

11. Dispositif selon la revendication 9 ou 10, caractérisé en ce que le circuit de comparaison de temps (10) produit un signal 1, précisément lorsque la valeur de sortie (S₉) de l'intégrateur de temps (9) correspond au moins à l'intervalle de temps de consigne (Tₛ), que le circuit de comparaison d'écoulement (14) produit de façon précise un signal 1, précisément lorsque la valeur de sortie du circuit diviseur (13) ne dépasse pas la valeur de consigne (Fₛ) de l'écoulement moyen, et que le circuit d'évaluation est réalisé sous la forme d'une porte OU (17), qui comporte une entrée inverseuse, à laquelle est appliqué le signal de sortie (S₁₀) du circuit de comparaison de temps (10), tandis que le circuit de remise à zéro est réalisé sous la forme d'une porte ET (16).

12. Dispositif selon l'une des revendications 8 à 11, caractérisé en ce que le débitmètre (2) comporte un capteur de pression différentielle (17) en vue de déterminer l'écoulement sur la base d'une chute de pression mesurée entre deux points qui sont distants dans leur direction d'écoulement.

13. Dispositif selon la revendication 12, caractérisé en ce que la chute de pression mesurée par le capteur de pression différentielle (18), apparaît au niveau d'un organe d'étranglement (22) intégré dans l'organe de réglage de débit (6) et qui est positionné par un servomoteur (21).

14. Dispositif selon la revendication 13, caractérisé en ce que le servomoteur (21) est activé, l'organe d'étranglement (22) bloque complètement l'écoulement et qu'en aval du capteur de pression différentielle (18) est branché un interrupteur (19), qui est ouvert par le signal qui active le servomoteur (21).
